# EUROPEAN PATENT APPLICATION

(11) **EP 1 580 425 A2**
(43) Date of publication of application: **28.09.2005**
(21) Application number: 05468006.1
(22) Date of filing: 21.03.2005
(51) Int. Cl.: F03D 3/06

(54) **Vertical axis wind turbine**

(30) Priority: 23.03.2004 SI 200400087
(71) Applicant: Milinkovic, Perko, 76323 Dragaljevac (BA)
(72) Inventor: Milinkovic, Perko, 76323 Dragaljevac (BA)
(74) Representative: Gros, Mladen

(57) **Abstract**

To a rotor supporting plate (1) by means of upper bearings (+2'1a, +2"1a, ..., +2'1b, +2"1b, ...) and lower bearings (-2'1a, -2"1a, ..., -2'1b, -2"1b, ...), which are fastened to the said rotor supporting plate (1) below the said upper bearings (+2'1a, +2"1a, ..., +2'1b, +2"1b, ...), there are pivotally attached upper axles (+2', +2", ...) and lower axles (-2', -2", ...), pertaining to the said bearings and circularly evenly mutually spaced above and below, respectively, a middle point of the said rotor supporting plate (1), to which said upper axles (+2', +2", ...) and said lower axles (-2', -2", ...) respective upper half-vanes (+3'a, +3"a, ..., +3'b, +3"b, ...) and lower half-vanes (-3'a, -3"a, ..., -3'b, -3"b, ...) are fastened. Two by two half-vanes are fastened to the common axle so that the pairs are displaced for 90° to each other. Upper and lower catching gears (+2'2a, +2'2b; +2"2a, +2"2b; ...; -2'2a, -2'2b; -2"2a, -2"2b; ...) are mounted to the ends of each respective upper axle and lower axle in such a way that the catching gears mesh each other in pairs. The rotor supporting plate (1) remains permanently a plane of symmetry of the upper and lower half-vanes.

The rotor of the invention is distinguished in that the mutual relative position of two half-vanes to each other is automatically adapted according to their current velocity with respect to the wind velocity, i.e. when moving towards the wind they close so that their air resistance is reduced.

## Description

The invention relates to a wind motor rotor acted upon by the wind at an approximately right angle to its transmission shaft and with the motor parts acted upon by the wind adapting themselves automatically to the direction of the wind.

A wind motor is a mechanism for converting the power of natural wind into useful mechanical power and transmitting said mechanical power to its point of use. A rotor of such motor is generally, in a known way, provided with several wings acted upon by the wind.

The wind motor rotor, however, can also be, in a known way, provided with vanes e.g. in the form of hemispherical cups of an anemometer. A disadvantage of such rotor is in that the vane has a large air resistance in the part of a circular motion when it moves towards the wind.

The invention solves the technical problem how to construct a wind motor rotor, wherein a transmission shaft of the motor should be oriented at a right angle to the wind direction, hence oriented intrinsically vertically, and the parts of the rotor picking up the wind power should be vanes and the form of the vanes should in any moment be automatically adapted to an angle between vector of the current vane velocity and the vector of the wind velocity.

The said technical problem is solved by a wind motor rotor having the features cited in the first claim and the variants of the embodiment are characterized by the features from dependent claims.

The wind motor rotor of the invention is distinguished in that its vanes are constructed of a pair of half-vanes, whose mutual position is automatically adapted according to their current velocity with respect to the wind velocity, i.e. when moving towards the wind they close so that their air resistance is reduced.

The invention will now be explained in more detail by way of the description of an embodiment and with reference to the accompanying drawing representing in
Fig. 1 a perspective view of the partly exploded rotor of the invention of the wind motor with two axles on either side of a rotor supporting plate, wherein the transmission shaft and its mounting to the rotor supporting plate are not shown,
Fig. 2 a side view of the wind motor rotor of the invention and
Fig. 3 a top view of the partly furnished wind motor rotor of the invention with four axles on either side of the rotor supporting plate.

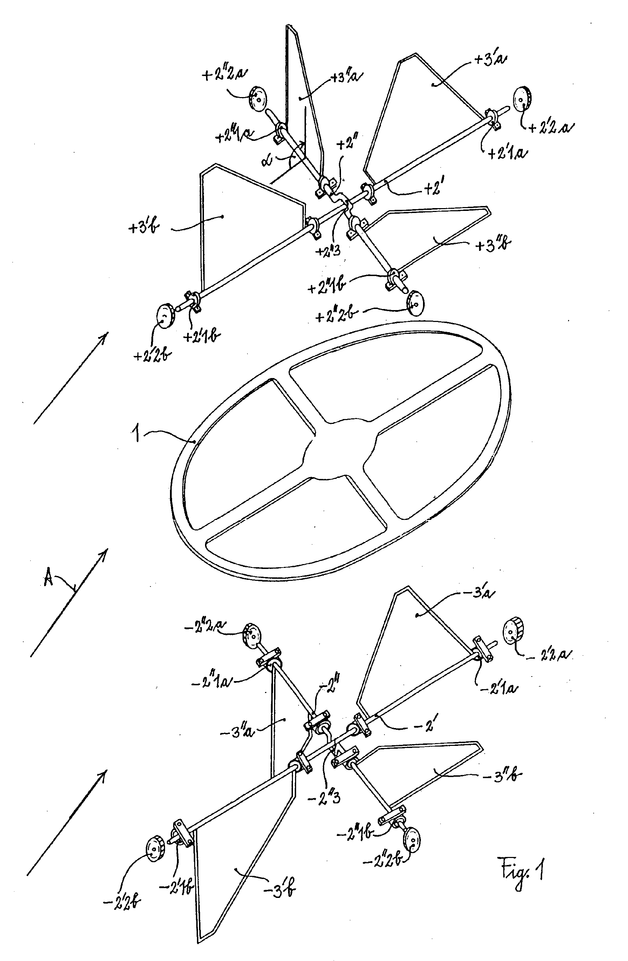

In Fig. 1 there are schematically shown some components of the rotor of the invention of a wind motor with two upper axles +2', +2" and two lower axles -2', -2".

Above and below a rotor supporting plate 1, by means of upper bearings +2'1a, +2"1a, +2'1b, +2''1b and lower bearings -2'1a, -2''1a, -2'1b, -2''1b, which are fastened to the said rotor supporting plate 1 below the said upper bearings, there are pivotally attached the upper axles +2', +2" and the lower axles -2', -2", pertaining to the said bearings and circularly mutually evenly spaced above and below, respectively, a middle point of the said rotor supporting plate 1.

All attachments to the rotor supporting plate 1, which has preferrably a circular shape, are made axially symmetrically with respect to an axis through its middle point.

The second upper axle +2" and the second lower axle -2" are in a region of traversing the first upper axle +2' and the first lower axle -2', respectively, in a central region of the rotor supporting plate 1 provided with an upper bridge +2"3 and with a lower bridge -2"3, respectively, in a such way that they bridge the first upper axle +2' and the first lower axle -2', respectively. The bridges +2"3, -2"3 allow a rotation of the second upper axle +2" and the second lower axle -2" for a largest allowable angle αₘₐₓ·

To said axles +2', +2"; -2', -2" there are fastened upper half-vanes +3'a, +3"a; +3'b, +3"b and lower half-vanes -3'a, -3"a; -3'b, -3"b, respectively.

The upper half-vanes +3'a, +3"a, +3'b, +3"b and the lower half-vanes -3'a, -3"a, -3'b, - 3"b are preferably flat plates. They are preferably formed in such a way that their width increases in the direction to the periphery of the rotor supporting plate 1.

Two by two half-vanes +3'a, +3'b; +3"a, +3"b; -3'a, -3'b; -3"a, -3"b are fastened to the common axle +2', +2", -2' and -2", respectively, in such a way that the pairs are displaced for 90° to each other.

The angle α in Fig. 1 represents a rotation angle of the half-vane with respect to the plane of the rotor supporting plate 1. This rotation comes about through an action of the wind.

To the ends of each upper axle +2', +2" and lower axle -2', -2", upper catching gears +2'2a, +2'2b; +2"2a, +2"2b and lower catching gears -2'2a, -2'2b; -2"2a, -2"2b, respectively, are mounted in such a way that each upper catching gear +2'2a, +2"2a, +2'2b, +2"2b meshes in the pertaining lower cathing gear -2'2a, -2"2a, -2'2b, -2"2b.

The mutual meshing of the catching gears +2'2a, -2'2a; +2'2b, -2'2b; +2"2a, -2"2a; +2"2b, -2"2b is performed in a such way that the plane of the rotor supporting plate 1 permanently remains a plane of symmetry of the planes of the upper and lower half-vanes +3'a, -3'a; +3"a, -3"a; +3'b, -3'b; +3"b, -3"b in each pair.

In each moment the rotation angle α of the upper half-vanes +3'a, +3'b; +3"a, +3"b with respect to the rotor supporting plate 1 is oppositely equal to the rotation angle of the lower half-vanes -3'a, -3'b; -3"a, -3"b. The rotation angle α of the half-vane is limited upwards to a value αₘₐₓ equal to + 90° or - 90°.

In Fig. 2 the wind motor rotor of the invention is shown having a transmission shaft 6, which is fastened to a mounting case 4 by means of a thrust bearing 5. The mounting case 4 is fastened to the rotor supporting plate 1. The transmission shaft 6 is oriented at a right angle to the rotor supporting plate 1 and during the operation it must be oriented approximately vertically.

The rotor of the invention with the approximately vertically oriented transmission shaft 6 starts rotating as soon as the wind starts blowing from any (horizontal) direction. The sense of the rotor rotation depends on which side of the transmission shaft 6, when looking at the motor in the wind direction A, those upper and lower half-vanes, which catch the wind, are situated. The axles of the upper half-vanes are connected through the catching gears to the axles of the lower half-vanes, therefore each upper half-vane opens and closes synchronously with the pertaining lower half-vane.

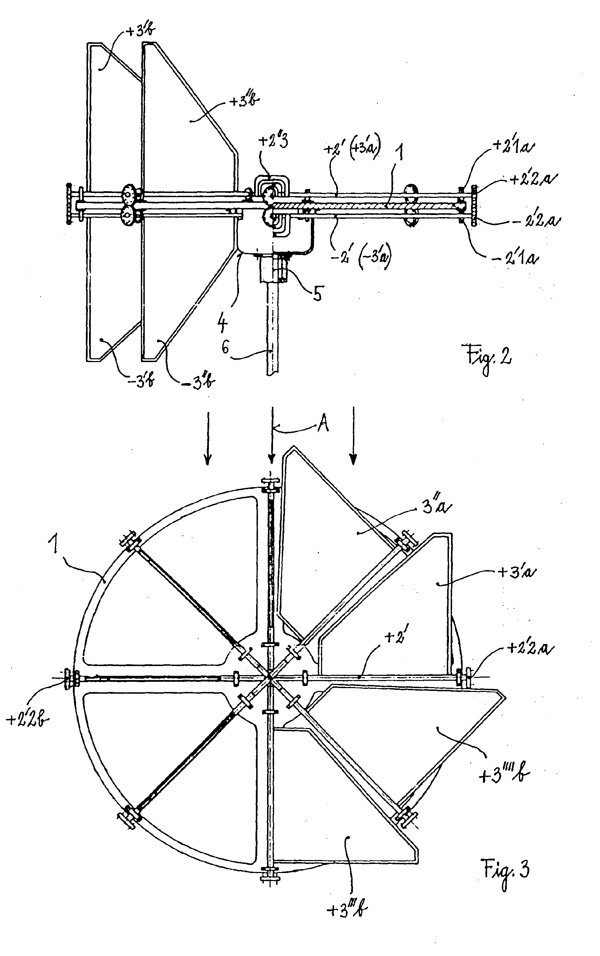

In Fig. 3 a top view of the partly furnished wind motor rotor of the invention with four axles on each side of the rotor supporting plate 1 is represented. There are mounted only the half-vanes +3'a, +3"a, +3"'b and +3""b (the lower half-vanes are hidden), which are opened by the wind blowing in the direction A. The number of the upper axles +2', +2", ... and the lower axles -2', -2", ... is only restricted by n≥2.

## Claims

1. Wind motor rotor acted upon by a wind at a right angle to its transmission shaft (6),
**characterized in**
**that** above and below a rotor supporting plate (1), which is mounted at a right angle to the transmission shaft (6),
by means of upper bearings (+2'1a, +2''1a, ..., +2'1b, +2''1b, ...) and lower bearings (-2'1a, -2''1a, ..., -2'1b, -2''1b, ...),
which are fastened to the said rotor supporting plate (1) below the said upper bearings (+2'1a, +2''1a, ..., +2'1b, +2''1b, ...),
there are pivotally attached upper axles (+2', +2", ...) and lower axles (-2', -2", ...), respectively, pertaining to the said bearings and circularly evenly mutually spaced above and below, respectively, a middle point of the said rotor supporting plate (1),
to which said upper axles (+2', +2", ...) and said lower axles (-2', -2", ...) upper half-vanes (+3'a, +3"a, ..., +3'b, +3"b, ...) and lower half-vanes (-3'a, -3"a, ..., -3'b, -3"b, ...), respectively, pertaining to the said axles are fastened,
**that** two by two half-vanes (+3'a, +3'b; +3"a, +3"b; ...; -3'a, -3'b; -3"a, -3"b; ...) are fastened, displaced for 90° to each other, to the common axle (+2', +2'', ...; -2', -2", ...),
**that** upper catching gears (+2'2a, +2'2b; +2"2a, +2"2b; ...) and lower catching gears (-2'2a, -2'2b; -2"2a, -2"2b; ...) are mounted to the ends of each upper axle (+2', +2", ...) and each lower axle (-2', -2", ...), respectively, in such a way that each upper catching gear (+2'2a, +2"2a, ..., +2'2b, +2"2b, ...) meshes the pertaining lower cathing gear (-2'2a, -2"2a, ..., -2'2b, -2"2b,
and **that** the mutual meshing of the catching gears (+2'2a, -2'2a; +2'2b, -2'2b; +2"2a, -2"2a; +2"2b, -2"2b; ...) is performed in such a way that the plane of the rotor supporting plate (1) remains permanently a symmetry plane of the planes of the upper and lower half-vanes (+3'a, -3'a; +3"a, -3"a; ...; +3'b, -3'b; +3"b, -3"b; ...).

2. Wind motor rotor as recited in claim 1, **characterized in**
**that** the upper half-vanes (+3'a, +3"a, ..., +3'b, +3"b, ...) and the lower half-vanes (-3'a, -3"a, ..., -3'b, -3"b, ...) are flat plates.

3. Wind motor rotor as recited in claim 1 or 2, **characterized in**
**that** a rotation angle α of the upper half-vanes (+3'a, +3'b; +3"a, +3"b; ...) and the lower half-vanes (-3'a, -3'b; -3"a, -3"b; ...) with respect to the rotor supporting plate (1) is limited upwards to αₘₐₓ equal to + 90° and - 90°, respectively.

4. Wind motor rotor as recited in claim 3, **characterized in**
**that** the upper axles (+2", ...) and lower axles (-2", ...) in a region of traversing other upper axles and lower axles, respectively, are provided with an upper bridge (+2"3, ...) and with a lower bridge (-2"3, ...), respectively, allowing each time a rotation of the pertaining axle for an angle α up to the value αₘₐₓ.

5. Wind motor rotor as recited in claim 3 or 4, **characterized in**
**that** the width of the upper half-vanes (+3'a, +3"a, ..., +3'b, +3"b, ...) and of the lower half-vanes (-3'a, -3"a, ..., -3'b, -3"b, ...) increases in the direction to the periphery of the rotor supporting plate (1).

6. Wind motor rotor as recited in any of claims 3 to 5, **characterized in**
**that** the transmission shaft (6) is fastened to a mounting case (4), which is mounted to the rotor supporting plate (1) by means of a thrust bearing (5).
